# EUROPEAN PATENT APPLICATION

(11) **EP 4 729 930 A1**
(43) Date of publication of application: **22.04.2026**
(21) Application number: 25826991.9
(22) Date of filing: 16.01.2025
(51) Int. Cl.: G01N 21/88, G06T 7/00, G06T 7/30, G06V 10/82, H01M 10/42

(54) **BATTERY APPEARANCE INSPECTION DEVICE AND BATTERY SORTING SYSTEM**

(30) Priority: 24.06.2024 KR 20240082154
(71) Applicant: LG Energy Solution, Ltd., Seoul 07335 (KR)
(72) Inventor: CHO, Min-Keun, Daejeon 34122 (KR); KIM, Tae-Young, Daejeon 34122 (KR); JEON, Hyo-Seung, Daejeon 34122 (KR)
(74) Representative: Goddar, Heinz J.
(86) International application number: PCT/KR2025/099051
(87) International publication number: WO 2026/005575

(57) **Abstract**

A battery appearance inspection apparatus according to one aspect of the present disclosure includes a lighting unit configured to irradiate light to a battery and change a lighting condition including at least one of a direction, an angle, and an intensity of the irradiated light at time intervals; an image generating unit configured to photograph a target portion of the battery based on the light irradiated by the lighting unit and generate a plurality of images of the target portion so that the plurality of images are photographed under different lighting conditions; an image processing unit configured to synthesize at least two images among the plurality of images to generate at least one composite image having depth information of the target portion; a first inspection unit configured to determine whether the battery is a defective product based on at least one image among the plurality of images; and a second inspection unit configured to determine whether the battery is a good product based on the at least one composite image.

## Description

### TECHNICAL FIELD

This application is based on and claims priority from Korean Patent Application No. 10-2024-0082154, filed on June 24, 2024, with the Korean Intellectual Property Office, the disclosure of which is incorporated herein in its entirety by reference.

The present disclosure relates to a battery appearance inspection apparatus and a battery sorting system, and more specifically, to a battery appearance inspection apparatus that inspects the appearance of a battery based on an image, and a battery sorting system including the battery appearance inspection apparatus.

### BACKGROUND ART

In general, a secondary battery refers to a battery that may be repeatedly charged and discharged, such as a lithium-ion battery, a lithium polymer battery, a nickel-cadmium battery, a nickel-hydrogen battery, or a nickel-zinc battery. A battery cell, which corresponds to the most basic secondary battery, may provide an output voltage of approximately 2.5 V to 4.2 V.

Recently, as these secondary batteries are widely used in small wireless devices such as mobile phones, tablet PCs, and laptops, as well as devices that require high output voltage and large charging capacity such as electric vehicles and ESSs (Energy Storage Systems), various types of batteries are being mass-produced. Accordingly, interest in and demand for technology that may quickly and accurately inspect the appearance of assembled batteries are increasing.

However, in a battery mass production system, the method in which workers directly visually inspect the appearance of assembled batteries has a problem in that it requires a lot of time and cost. In addition, the existing vision inspection method to solve this problem has a problem in that a false negative occurs, in which a defective battery is determined as a good product, or a false positive occurs, in which a good battery is determined as a defective product, due to changes in the direction, angle, or intensity of the light irradiated on the inspection target battery, image recognition errors, and the emergence of new types of defects.

### DISCLOSURE

### Technical Problem

The technical object that the present disclosure seeks to solve is to provide a battery appearance inspection apparatus that reduces the time and cost required for battery appearance inspection while improving the accuracy and reliability of the inspection result, and a battery sorting system including the battery appearance inspection apparatus.

### Technical Solution

A battery appearance inspection apparatus according to one aspect of the present disclosure comprises: a lighting unit configured to irradiate light to a battery and change a lighting condition including at least one of a direction, an angle, and an intensity of the irradiated light at time intervals; an image generating unit configured to photograph a target portion of the battery based on the light irradiated by the lighting unit and generate a plurality of images of the target portion so that the plurality of images are photographed under different lighting conditions; an image processing unit configured to synthesize at least two images among the plurality of images to generate at least one composite image having depth information of the target portion; a first inspection unit configured to determine whether the battery is a defective product based on at least one image among the plurality of images; and a second inspection unit configured to determine whether the battery is a good product based on the at least one composite image.

In an embodiment, the lighting unit may include a plurality of light sources arranged at different locations and configured to irradiate light toward the battery at different time points.

In an embodiment, the image generating unit may include a plurality of cameras configured to photograph different target portions of the battery at different locations, respectively.

In an embodiment, the plurality of cameras may include a first camera configured to photograph a first target portion located at an upper end of the battery; a second camera configured to photograph a second target portion located at a lower end of the battery; and at least one third camera configured to photograph a third target portion located at a side surface of the battery.

In an embodiment, the image processing unit may be configured to generate a first image matrix by arranging at least two images among the plurality of images, and the first inspection unit may be configured to determine whether the battery is a defective product based on the first image matrix.

In an embodiment, the image processing unit may be configured to generate a second image matrix by arranging at least one image among the plurality of images and the at least one composite image, and the second inspection unit may be configured to determine whether the battery is a good product based on the second image matrix.

In an embodiment, the first inspection unit may be configured to determine whether the battery is a defective product before the second inspection unit, and the second inspection unit may include a first determination module configured to determine whether the battery is a good product based on the at least one composite image, when the battery is determined not to correspond to a defective product by the first inspection unit.

In an embodiment, the first determination module may be configured to determine whether the at least one composite image belongs to one of types of good battery images based on a first deep learning model trained using the good battery images, and determine the battery as not corresponding to a good product when the at least one composite image corresponds to OOD (Out of Distribution) data that does not belong to the types.

In an embodiment, the second inspection unit may further include a second determination module configured to re-determinate whether the battery is a defective product based on the at least one composite image, when the battery is determined to be a defective product by the first inspection unit.

In an embodiment, the second determination module may be configured to re-determinate whether the battery is a defective product based on a second deep learning model trained using defective battery images.

In an embodiment, the first determination module may be configured to determine whether the battery is a good product based on the at least one composite image, when the battery does not correspond to a defective product as a result of re-determination by the second determination module.

In an embodiment, the battery appearance inspection apparatus may further comprise a learning image generating unit configured to process an image in which a defective portion of the battery appears among the plurality of images and the at least one composite image and generate a learning image used for training a deep learning model for battery appearance inspection.

In an embodiment, the learning image generating unit may be configured to set a partial area including the defective portion from an entire area of the image where the defective portion appears and generate the learning image by cropping the remaining area excluding the partial area from the entire area.

A battery sorting system according to another aspect of the present disclosure comprises the battery appearance inspection apparatus; and a transport device configured to transport the battery to one location among a pre-designated plurality of locations based on the inspection result of the battery appearance inspection apparatus.

In an embodiment, the transport device may include a first transport unit configured to transport the battery to a first location, when the battery is determined to be a good product by at least the second inspection unit among the first inspection unit and the second inspection unit of the battery appearance inspection apparatus; a second transport unit configured to transport the battery to a second location, when the battery is determined to be not a defective product by the first inspection unit and also determined to be not a good product by the second inspection unit; and a third transport unit configured to transport the battery to a third location, when the battery is determined to be a defective product by the first inspection unit and is re-determination as a defective product by the second inspection unit.

### Advantageous Effects

The battery appearance inspection apparatus according to the present disclosure performs multiple inspections of the appearance of a battery based on a plurality of images generated by photographing a target portion of the battery under different lighting conditions and a composite image generated by synthesizing the plurality of images, thereby reducing the time and cost required for battery appearance inspection and improving the accuracy and reliability of the inspection result.

In addition, the battery appearance inspection apparatus according to the present disclosure includes a first inspection unit configured to determine whether the battery is a defective product based on at least one image among the plurality of images, and a second inspection unit configured to determine whether the battery is a good product based on the composite image having depth information of the target portion, thereby reducing the false negative rate and the false positive rate occurring in the vision inspection.

In addition, if the battery is determined not to be a defective product by the first inspection unit, the second inspection unit determines whether the composite image belongs to one of the types of good battery images based on the first deep learning model trained using good battery images, and if the composite image corresponds to OOD (Out of Distribution) data that does not belong to the types, the battery is determined not to be a good product, thereby minimizing the false negative rate of battery appearance inspection and detecting a battery with a new type of defect.

In addition, if the battery is determined to be a defective product by the first inspection unit, the second inspection unit may re-determinate whether the battery is a defective product based on the second deep learning model trained for each defect type, thereby minimizing the false positive rate of battery appearance inspection and preventing the loss of good product batteries.

In addition, the battery appearance inspection apparatus according to the present disclosure generates an image matrix by arranging the plurality of images, or the plurality of images and the composite image, in a matrix format, and inspects the battery using this image matrix, thereby further improving the accuracy and reliability of the inspection result while preventing an increase in inspection time.

In addition, the battery appearance inspection apparatus according to the present disclosure processes an image in which a defective portion of the battery appears among the plurality of images and the composite image to generate a learning image used for learning a deep learning model for battery appearance inspection, thereby facilitating learning and upgrading of the corresponding deep learning model.

Furthermore, a person having ordinary skill in the art to which the present disclosure belongs will be able to clearly understand from the following description that various embodiments according to the present disclosure can solve various technical problems not mentioned above.

### DESCRIPTION OF DRAWINGS

FIG. 1 is a block diagram illustrating a battery appearance inspection apparatus according to an embodiment of the present disclosure.
FIG. 2 is a perspective view illustrating an example of a battery that may be inspected according to the present disclosure.
FIG. 3 is a cross-sectional view of the battery illustrated in FIG. 2.
FIG. 4 is a drawing illustrating an image generation method of the battery appearance inspection apparatus according to an embodiment of the present disclosure.
FIG. 5 is a drawing illustrating a plurality of cameras of the battery appearance inspection apparatus according to an embodiment of the present disclosure.
FIG. 6 is a drawing illustrating an example of a first image matrix transmitted to the first inspection unit.
FIG. 7 is a drawing illustrating an example of a composite image generation method applicable to the present disclosure.
FIG. 8 is a drawing illustrating an example of a second image matrix transmitted to the second inspection unit.
FIG. 9 is a block diagram illustrating a first inspection unit and a second determination module of a second inspection unit of the battery appearance inspection apparatus according to an embodiment of the present disclosure.
FIG. 10 is a diagram illustrating a learning image generation method of the battery appearance inspection apparatus according to an embodiment of the present disclosure.
FIG. 11 is a flowchart illustrating a battery appearance inspection method according to an embodiment of the present disclosure.
FIG. 12 is a block diagram illustrating a battery sorting system according to an embodiment of the present disclosure.

### BEST MODE

Hereinafter, in order to clarify the solution corresponding to the technical challenge of the present disclosure, embodiments according to the present disclosure will be described in detail with reference to the attached drawings. However, when explaining the present disclosure, if a description of a related publicly known technology obscures the gist of the present disclosure, the description thereof may be omitted. In addition, the terms used in this specification are terms defined in consideration of the functions in the present disclosure, and these may vary depending on the intention or custom of the designer, manufacturer, etc. Therefore, the definitions of the terms described below should be made based on the contents throughout this specification.

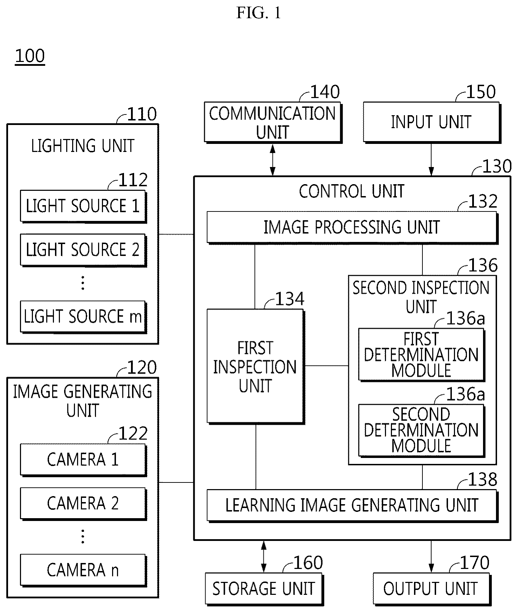

FIG. 1 is a block diagram illustrating a battery appearance inspection apparatus 100 according to an embodiment of the present disclosure.

As illustrated in FIG. 1, a battery appearance inspection apparatus 100 according to an embodiment of the present disclosure includes a lighting unit 110, an image generating unit 120, and a control unit 130. According to an embodiment, the battery appearance inspection apparatus 100 may further include one or more of a communication unit 140, an input unit 150, a storage unit 160, and an output unit 170.

The lighting unit 110 may be configured to change a lighting condition including at least one of a direction, an angle, and an intensity of light irradiated onto the battery at time intervals while irradiating light onto the inspection target battery.

To this end, the lighting unit 110 may include a plurality of light sources 112 arranged at different locations and configured to irradiate light toward the battery at different time points. For example, the lighting unit 110 may include m light sources 112 (m is an integer greater than or equal to 2).

In an embodiment, the plurality of light sources 112 may all have the same shape and structure. In another embodiment, the plurality of light sources 112 may have two or more kinds of shapes or structures. For example, the plurality of light sources 112 may include one or more kinds of a spherical light source, a rod-shaped light source, a ring-shaped light source, and a dome-shaped light source.

The image generating unit 120 is configured to photograph a target portion of the battery based on the light irradiated by the lighting unit 110 and generate a plurality of images regarding the corresponding target portion. In this case, the plurality of images may be photographed under different lighting conditions, respectively. To this end, the image generating unit 120 may include a camera that photographs the target portion of the battery at a predetermined location.

In an embodiment, the image generating unit 120 may be configured to divide the battery into a plurality of target portions and generate a plurality of images photographed under different lighting conditions for each target portion. To this end, the image generating unit 120 may include a plurality of cameras 120 that photograph different target portions of the battery at different locations, respectively.

For example, the image generating unit 120 may include a first camera that photographs a first target portion located at an upper end of the battery, a second camera that photographs a second target portion located at a lower end of the battery, and at least one third camera that photographs a third target portion located at a side surface of the battery.

The control unit 130 controls the image generating unit 120 and is configured to inspect the appearance of the battery using images generated by the image generating unit 120. To this end, the control unit 130 may include a general-purpose processor or an ASIC (application-specific integrated circuit) for executing inspection logic, and may optionally further include hardware such as a memory, a register, etc., according to an embodiment. Meanwhile, the control unit 130 may be configured by a combination of hardware and software. That is, the control logic of the control unit 130 is configured as a computer program and stored in the memory of the control unit 130 or a storage unit 160 described below, and the stored computer program may be executed through the hardware of the control unit 130.

Meanwhile, the control unit 130 includes an image processing unit 132, a first inspection unit 134, and a second inspection unit 136 as functional components for performing battery appearance inspection. In an embodiment, the control unit 130 may further include a learning image generating unit 138.

The image processing unit 132 is configured to generate at least one composite image having depth information of the target portion by synthesizing at least two images among the plurality of images generated by photographing the target portion of the battery. For example, the image processing unit 132 may generate the at least one composite image using a photometric stereo algorithm.

The first inspection unit 134 is configured to determine whether the battery is a defective product based on at least one image among the plurality of images. In this case, each of the plurality of images may be a general RGB image. In addition, the first inspection unit 134 may be configured to determine whether the battery is a defective product using a rule-based inspection algorithm, and to classify a defect location and a defect type of a battery determined to be a defective product.

In an embodiment, the image processing unit 132 may be configured to generate a first image matrix by arranging at least two images among the plurality of images in a matrix format. Additionally, the image processing unit 132 may provide the generated first image matrix to the first inspection unit 134.

In this case, the first inspection unit 134 may be configured to determine whether the battery is a defective product based on the first image matrix. For example, the first inspection unit 134 may determine whether the battery is a defective product based on each image included in the first image matrix, and may synthesize the determination results for each image to finally determine whether the battery is a defective product.

In this way, the present disclosure may prevent an increase in inspection time while improving the accuracy and reliability of the inspection result by performing multiple inspections for defects in the battery using an image matrix.

The second inspection unit 136 is configured to determine whether the battery is a good product based on at least one composite image generated by the image processing unit 132.

In an embodiment, the first inspection unit 134 may be configured to determine whether the battery is a defective product before the second inspection unit 136.

In this case, the second inspection unit 136 may be configured to re-determinate whether the battery is a good product or a defective product based on the determination result by the first inspection unit 134. To this end, the second inspection unit 136 may include a first determination module 136a and a second determination module 136b.

The first determination module 136a of the second inspection unit 136 may be configured to determine whether the battery is a good product based on the at least one composite image, if the battery is determined not to be a defective product by the first inspection unit 134.

For this purpose, the first determination module 136a may use a first deep learning model trained using good battery images. In this case, the first determination module 136a may determine whether the at least one composite image belongs to one of the types of good battery images based on the first deep learning model, and if the at least one composite image corresponds to OOD (Out of Distribution) data that does not belong to the types, the first determination module 136a may determine the battery as at least not a good product. The first deep learning model may be one to which a CNN (Convolutional Neural Network) is applied.

It should be noted that even if the battery is determined not to be a good product, the battery is not immediately determined to be a defective product. As will be explained further below, a battery determined not to be a good product may be classified separately from batteries determined to be a good product and batteries determined to be a defective product, or may be re-determination as to whether it is a defective product by the second determination module 136b described below.

Meanwhile, the second determination module 136b of the second inspection unit 136 may be configured to re-determinate whether the battery is a defective product based on the at least one composite image if the battery is determined to be a defective product by the first inspection unit 134.

For this purpose, the second determination module 136b may use a second deep learning model trained using defective battery images. In this case, the second determination module 136b may use a plurality of second deep learning models respectively corresponding to defect types such as dents, scratches, contamination, and rust. In this case, each second deep learning model may be trained using battery images in which a corresponding type of defect appears. In addition, each second deep learning model may be one to which a CNN (Convolutional Neural Network) is applied.

In an embodiment, the first determination module 136a may be configured to redetermine whether the battery is a good product based on the at least one composite image if the re-determination result by the second determination module 136b shows that the battery is not a defective product. In this case, the battery determined to be not a good product by the first determination module 136a may be classified separately from the batteries determined to be good products and the batteries determined to be defective products.

In an embodiment, the image processing unit 132 may be configured to generate a second image matrix by arranging at least one image among the plurality of images generated by the image generating unit 120 and the at least one composite image in a matrix format. In addition, the image processing unit 132 may provide the generated second image matrix to the second inspection unit 136.

In this case, the second inspection unit 136 may be configured to determine whether the battery is a good product based on the second image matrix. For example, the second inspection unit 136 may calculate a probability value for each image included in the second image matrix that the battery is a good product or a defective product, and may determine whether the battery is a good product or a defective product based on the probability values calculated for each image.

In this way, the battery appearance inspection apparatus according to the present disclosure generates an image matrix by arranging the plurality of images, or the plurality of images and the composite image, in a matrix format, and inspects the battery using this image matrix, thereby further improving the accuracy and reliability of the inspection result while preventing an increase in inspection time.

Meanwhile, as mentioned above, the battery appearance inspection apparatus 100 may include a learning image generating unit 138. The learning image generating unit 138 may be configured to process an image in which a defective portion of the battery appears among the plurality of images and the at least one composite image, and generate a learning image used for training a deep learning model for battery appearance inspection.

For example, the learning image generating unit 138 may be configured to set a partial area including the defective portion of the battery from the entire area of the image in which the corresponding defective portion of the battery appears, and generate the learning image by cropping the remaining area excluding the partial area from the entire area. In this case, the partial area may be set such that the defective portion of the battery is located at the center thereof.

Learning images generated in this way may be used for training a new deep learning model or upgrading the second deep learning model through retraining.

The image processing unit 132, the first inspection unit 134, the second inspection unit 136 and the learning image generating unit 138 of the above-described control unit 130 may be implemented as a combination of a processor and a program executed by the processor. In this case, the control unit 130 may be implemented as a single processor, or may be implemented as two or more processors that are interconnected.

In an embodiment, the battery appearance inspection apparatus 100 may further include a communication unit 140. The communication unit 140 may be configured to receive data transmitted from a remotely located server or communication terminal via a wired and/or wireless communication network and transmit the data to the control unit 130, or transmit image data, inspection result data, etc. processed by the control unit 130 to the remotely located server or communication terminal. To this end, the communication unit 140 may include a communication modem that performs wired and/or wireless communication.

In an embodiment, the battery appearance inspection apparatus 100 may further include an input unit 150. The input unit 150 may be configured to receive commands or data from a user or an administrator. For this purpose, the input unit 150 may include an input device such as a keyboard, operating buttons, or a touch panel.

In an embodiment, the battery appearance inspection apparatus 100 may further include a storage unit 160. The storage unit 160 may be configured to store and manage data required for the operation of the battery appearance inspection apparatus 100 for diagnosing a battery. To this end, the storage unit 160 may include one or two or more of a ROM, a RAM, an EEPROM, a register, a flash memory, a CD-ROM, a magnetic tape, a hard disk, a floppy disk, and an optical data recording device.

In an embodiment, the battery appearance inspection apparatus 100 may further include an output unit 170. The output unit 170 may be configured to output the inspection result performed through the control unit 130 as a visual signal, an audible signal or an audiovisual signal. For this purpose, the output unit 170 may include a visual output device such as a light-emitting diode, a monitor, a display panel or a touch screen. In addition, the output unit 170 may further include a sound generating device such as a speaker.

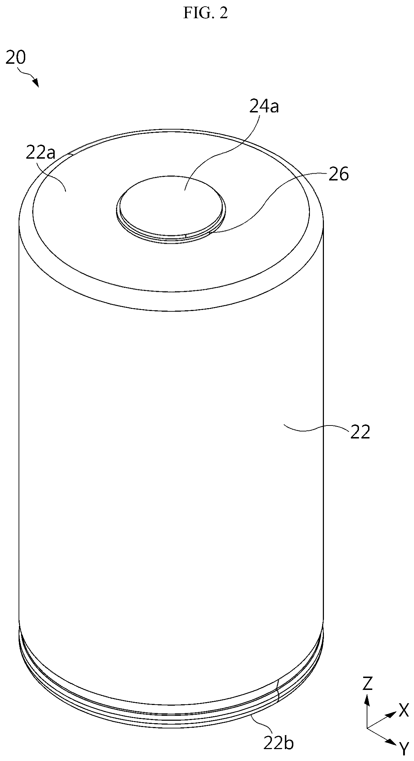

FIG. 2 is a perspective view illustrating an example of a battery 20 that may be inspected according to the present disclosure.

As illustrated in FIG. 2, the battery appearance inspection apparatus 100 according to the present disclosure may inspect the appearance of a cylindrical battery 20. According to an embodiment, the battery appearance inspection apparatus 100 according to the present disclosure may be configured to inspect different types of batteries, such as pouch-type batteries, square batteries, etc., as well as battery modules or battery packs including a plurality of batteries.

The battery 20 has a cylindrical case 22 forming an outer body. The case 22 has an upper surface 22a and a lower surface 22b, and a rivet 24a that functions as a first electrode terminal may be provided at the center of the upper surface 22a.

According to an embodiment, the upper surface 22a of the case 22 may be configured to perform the function of a second electrode terminal. In this case, an insulation gasket 26 may be provided between the upper surface 22a of the case 22 and the rivet 24a.

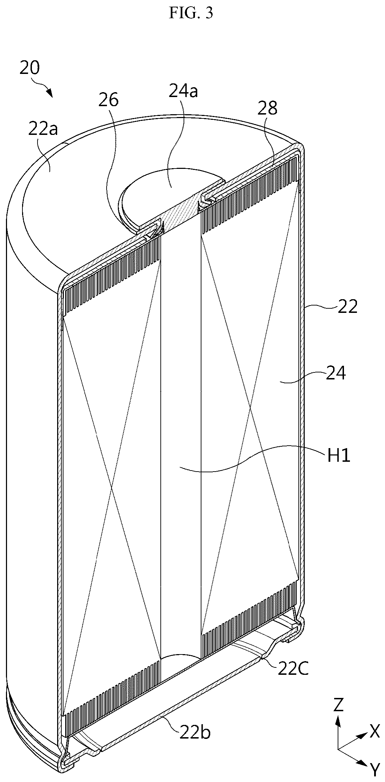

FIG. 3 is a cross-sectional view of the battery 20 illustrated in FIG. 2.

As illustrated in FIG. 3, the case 22 of the battery 20 accommodates the electrode assembly 24 and an electrolyte material. The electrode assembly 24 has a laminated structure in which a positive electrode plate and a negative electrode plate are laminated with a separator interposed therebetween. For example, the electrode assembly 24 may have a jelly-roll shape. In this case, a hollow H1 may be formed at the center of the electrode assembly 24.

Additionally, the lower surface 22b of the case 22 may be provided with a venting structure 22c configured to discharge gas generated inside the battery 20.

An insulator 28 may be placed between the upper uncoated portion of the electrode assembly 24, which is electrically connected to the rivet 24a, and the upper surface 22a of the case 22.

Since the internal structure of these batteries is implemented in a space-intensive manner to reduce the size of the battery and improve the energy density, any deformation or defect in the battery appearance directly affects the performance of the battery and reduces the safety of the battery. Therefore, it is necessary to accurately inspect whether the battery appearance has defects before activating or using the assembled battery.

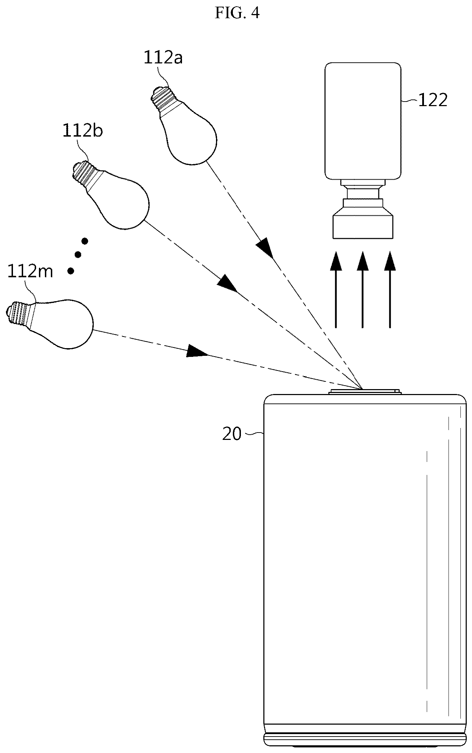

FIG. 4 is a drawing illustrating an image generation method of the battery appearance inspection apparatus according to an embodiment of the present disclosure.

As illustrated in FIG. 4, the lighting unit 110 of the battery appearance inspection apparatus 100 according to the present disclosure is configured to irradiate light to the inspection target battery 20. In this case, the lighting unit 110 uses a plurality of light sources 112a to 112m respectively arranged at different locations and configured to irradiate light toward the battery 20 at different time points, thereby changing a lighting condition including at least one of the direction, angle, and intensity of the light irradiated to the battery 20 at time intervals.

Then, the image generating unit 120 may photograph a target portion (e.g., an upper end portion) of the battery through the camera 122 based on the light irradiated by the lighting unit 110, thereby generating a plurality of images of the corresponding target portion, which are photographed under different lighting conditions.

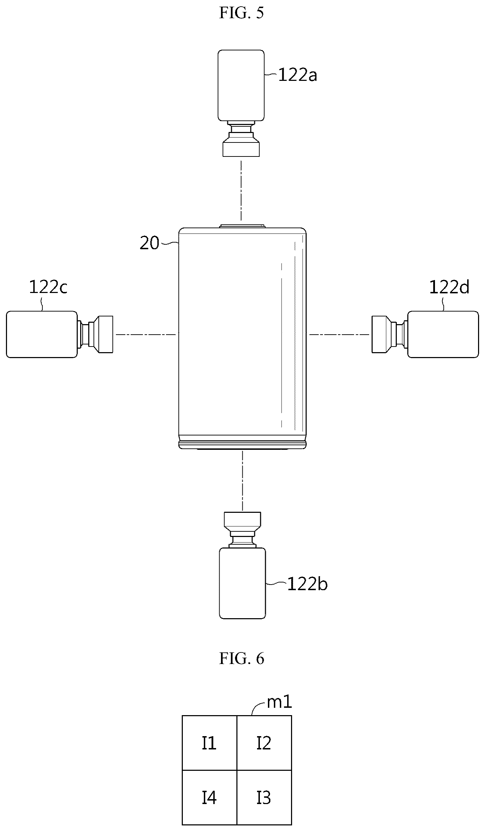

FIG. 5 is a drawing illustrating a plurality of cameras of the battery appearance inspection apparatus according to an embodiment of the present disclosure.

As illustrated in FIG. 5, the image generating unit 120 of the battery appearance inspection apparatus 100 according to the present disclosure may generate a plurality of images photographed under different lighting conditions for each target portion by using a plurality of cameras 120 of the battery appearance inspection apparatus 100 that photograph different target portions at different locations, respectively.

For example, the image generating unit 120 may include a first camera 122a that photographs a first target portion (e.g., a rivet portion) located at an upper end of the battery 20, a second camera 122b that photographs a second target portion (e.g., a vent structure portion) located at a lower end of the battery 20, and at least one third camera 122c, 122d that photographs a third target portion located at a side of the battery.

FIG. 6 is a drawing illustrating an example of a first image matrix transmitted to the first inspection unit 134.

As illustrated in FIG. 6, the image processing unit 132 of the battery appearance inspection apparatus 100 according to the present disclosure may generate a first image matrix m1 by arranging at least two images among a plurality of images generated by the image generating unit 120 in a matrix format. The number of rows and columns of the first image matrix m1 may be changed in various ways.

The image processing unit 132 may provide the first image matrix m1 generated as described above to the first inspection unit 134. Then, the first inspection unit 134 may determine whether the battery is a defective product based on the first image matrix m1.

For example, the first inspection unit 134 may determine whether the battery is a defective product based on each image included in the first image matrix m1, and may synthesize the determination results for each image to finally determine whether the battery is a defective product.

In this way, the present disclosure may prevent an increase in inspection time while improving the accuracy and reliability of inspection results by performing multiple inspections for defects in the battery using an image matrix.

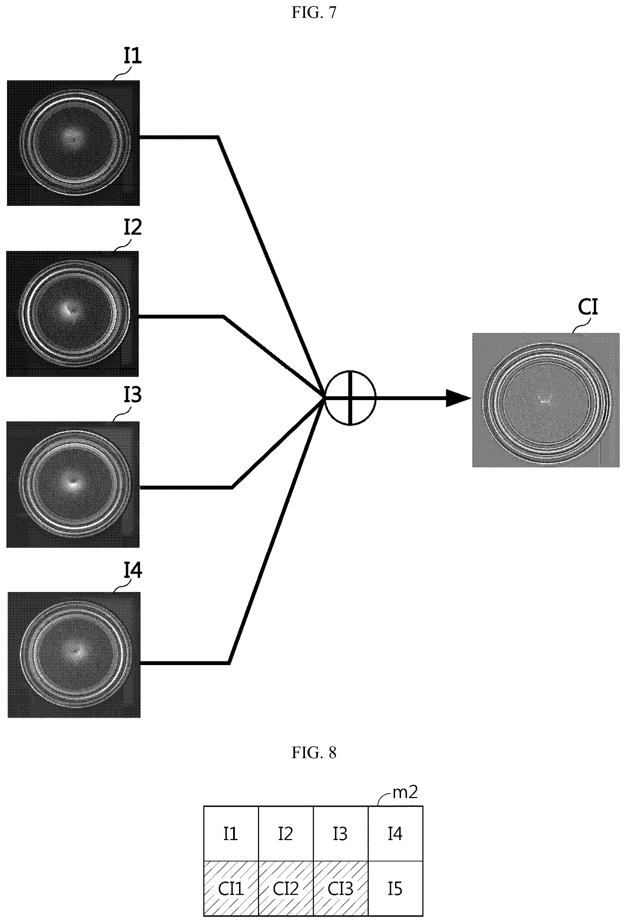

FIG. 7 is a drawing illustrating an example of a composite image generation method applicable to the present disclosure.

As illustrated in FIG. 7, the image processing unit 132 is configured to generate at least one composite image having depth information of the corresponding target portion by synthesizing at least two images among a plurality of images generated by photographing the target portion of the battery. For example, the image processing unit 132 may generate a composite image CI having depth information of the corresponding target portion by synthesizing images I1 to I4 photographed under different lighting conditions through a photometric stereo algorithm.

FIG. 8 is a drawing illustrating an example of a second image matrix transmitted to the second inspection unit 136.

As illustrated in FIG. 8, the image processing unit 132 may generate a second image matrix m2 by arranging the images I1 to I5 photographed under different lighting conditions and the composite images CI1 to CI3 synthesized with different combinations in a matrix format. The number of rows and columns of the second image matrix m2 may be variously changed. In addition, the combination of images constituting the second image matrix m2 may be determined according to the type of defect determined by the first inspection unit 134.

The image processing unit 132 may provide the second image matrix m2 generated as described above to the second inspection unit 136. Then, the second inspection unit 136 may determine whether the battery is a good product or a defective product based on the second image matrix m2.

For example, the second inspection unit 136 may calculate a probability value for each image included in the second image matrix m2 that the battery is a good product or a defective product, and may finally determine whether the battery is a good product or a defective product based on the probability values calculated for each image.

In this way, the battery appearance inspection apparatus according to the present disclosure may prevent an increase in inspection time while further improving the accuracy and reliability of the inspection result by inspecting the battery using an image matrix that combines a photographed image and a composite image.

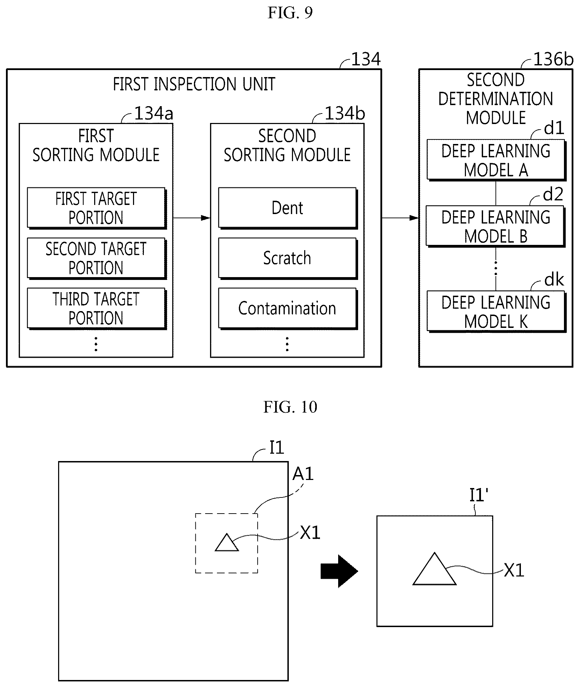

FIG. 9 is a block diagram illustrating a first inspection unit 134 and a second determination module 136b of a second inspection unit 136 of the battery appearance inspection apparatus according to an embodiment of the present disclosure.

As illustrated in FIG. 9, the first inspection unit 134 may be configured to determine whether the battery is a defective product using the first image matrix m1 generated for each target portion of the battery, and to classify the location where the defect occurs and the type of the defect among the entire surface of the battery.

In an embodiment, the first inspection unit 134 may include a first sorting module 134a and a second sorting module 134b. In this case, the first sorting module 134a may divide the entire surface of the battery into a plurality of target portions, and classify a location where a defect in the battery occurs into one of the plurality of target portions.

The second sorting module 134b may classify the type of defect occurring in the battery into one of several predetermined types based on a rule-based inspection algorithm.

The second determination module 136b of the second inspection unit 136 may re-determinate whether the battery is a defective product based on the second image matrix m2 including the composite image described above, if the battery is determined to be a defective product by the first inspection unit 134.

For this purpose, the second determination module 136b may include a plurality of deep learning models d1 to dk trained using defective battery images. In this case, the plurality of deep learning models d1 to dk may be models trained in relation to one type of defect among various types of defect, such as a dent, a scratch, contamination, or rust.

For example, if the type of defect determined by the first inspection unit 134 is a dent, the second determination module 136b may re-determinate whether the battery is a defective product by using a deep learning model trained with battery images showing dents among the plurality of deep learning models d1 to dk.

FIG. 10 is a diagram illustrating a learning image generation method of the battery appearance inspection apparatus according to an embodiment of the present disclosure.

As illustrated in FIG. 10, the learning image generating unit 138 of the battery appearance inspection apparatus 100 according to an embodiment of the present disclosure may process an image I1 in which a defective portion X1 of the battery appears among images generated by the image generating unit 120 or the composite images synthesized by the image processing unit 132, to generate a learning image I1' used for training a deep learning model for battery appearance inspection.

For example, the learning image generating unit 138 may set a partial area A1 including the defective portion X1 of the battery in the entire area of the image I1 where the defective portion X1 of the battery appears, and generate the learning image I1' by cropping the remaining area excluding the partial area A1 from the entire area of the image I1. In this case, the partial area A1 may be set such that the defective portion X1 of the battery is located at the center thereof. In addition, the learning image I1' may be an image that enlarges the partial area A1.

Learning images generated in this way may be used for training a new deep learning model or upgrading the second deep learning model through retraining.

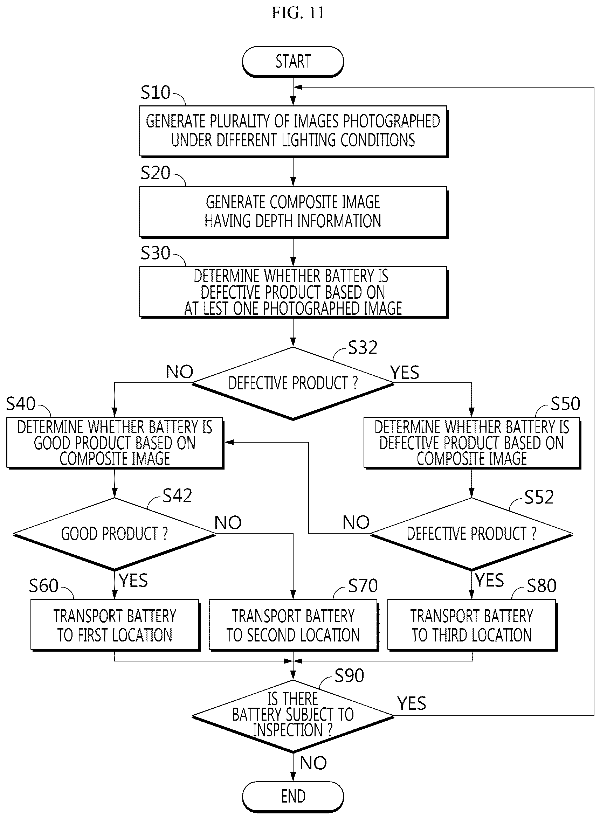

FIG. 11 is a flowchart illustrating a battery appearance inspection method according to an embodiment of the present disclosure. Referring to FIG. 11, the operation of the battery appearance inspection apparatus 100 described above is explained in time series.

As illustrated in FIG. 11, while the lighting unit 110 of the battery appearance inspection apparatus 100 irradiates light onto the battery while changing the lighting condition including at least one of the direction, angle, and intensity of light at different times, the image generating unit 120 of the battery appearance inspection apparatus 100 photographs a target portion of the battery and generates a plurality of images respectively photographed under different lighting conditions, as a plurality of images regarding the target portion (S10).

Next, the image processing unit 132 of the battery appearance inspection apparatus 100 synthesizes at least two images among the plurality of images to generate at least one composite image having depth information of the corresponding target portion (S20).

Next, the first inspection unit 134 of the battery appearance inspection apparatus 100 determines whether the battery is a defective product based on at least one image among the plurality of images (S30, S32).

For example, the image processing unit 132 generates a first image matrix by arranging at least two images among the plurality of images in a matrix format and provides the first image matrix to the first inspection unit 134, and the first inspection unit 134 may determine whether the battery is a defective product based on the provided first image matrix.

If the primary determination result by the first inspection unit 134 determines that the battery is not a defective product, the second inspection unit 136 of the battery appearance inspection apparatus 100 may determine whether the battery is a good product based on at least one composite image synthesized by the image processing unit 132 (S40, S42).

For example, the image processing unit 132 generates a second image matrix by arranging at least one image among the plurality of images generated by the image generating unit 120 and the at least one composite image in a matrix format and provides the second image matrix to the second inspection unit 136, and the first determination module 136a of the second inspection unit 136 may determine whether the battery is a good product based on the provided second image matrix. In this case, the first determination module 136a may determine whether the battery is a good product by using a first deep learning model trained using good battery images.

If the battery is determined to be a good product as a result of secondary determination by the first determination module 136a of the second inspection unit 136, the battery may be transported to the first location where subsequent processes for good batteries are performed (S60). On the other hand, if the battery is determined to be not a good product, the battery may be transported to the second location where batteries subject to re-inspection are gathered (S70).

Meanwhile, if the battery is determined to be a defective product as a result of the primary determination by the first inspection unit 134, the second inspection unit 136 of the battery appearance inspection apparatus 100 may re-determination whether the battery is a defective product based on at least one composite image synthesized by the image processing unit 132 (S50, S52).

For example, the second determination module 136b of the second inspection unit 136 may re-determinate whether the battery is a defective product based on the second image matrix provided from the image processing unit 132. In this case, the second determination module 136b may re-determinate whether the battery is a defective product using a second deep learning model trained using defective battery images.

If the battery is determined to be a defective product as a result of secondary determination by the second determination module 136b of the second inspection unit 136, the battery may be transported to a third location where defective batteries are collected (S80). On the other hand, if the battery is determined not to be a defective product, the first determination module 136a may determine again whether the battery is a good product.

The battery appearance inspection apparatus 100 may repeat the above-described steps (S10 to S80) if the next inspection target battery exists (S90).

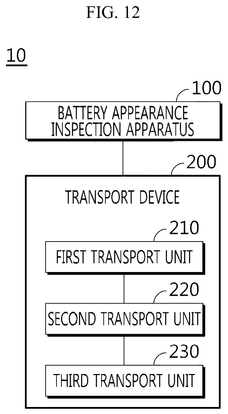

FIG. 12 is a block diagram illustrating a battery sorting system 10 according to an embodiment of the present disclosure.

As illustrated in FIG. 12, a battery sorting system 10 according to an embodiment of the present disclosure includes the battery appearance inspection apparatus 100 described above and a transport device 200.

The transport device 200 is configured to transport the battery to one of a pre-designated plurality of locations based on the inspection result of the battery appearance inspection apparatus 100.

For example, the transport device 200 may include a first transport unit 210, a second transport unit 220, and a third transport unit 230.

The first transport unit 210 may be configured to transport the battery to the first location where subsequent processing for the good battery is performed, if the battery is determined to be a good product by at least the second inspection unit 136 among the first inspection unit 134 and the second inspection unit 136 of the battery appearance inspection apparatus 100.

The second transport unit 220 may be configured to transport the battery to the second location where batteries subject to re-inspection are gathered, if the battery is determined by the first inspection unit not to be a defective product and also determined by the second inspection unit not to be a good product.

The third transport unit 230 may be configured to transport the battery to the third location where defective batteries are collected, if the battery is determined to be a defective product by the first inspection unit and re-determined as a defective product by the second inspection unit.

Each of the first transport unit 210, the second transport unit 220 and the third transport unit 230 may include one or more of a conveyor, a shuttle and a robot arm.

As described above, the battery appearance inspection apparatus according to the present disclosure performs multiple inspections of the appearance of a battery based on a plurality of images generated by photographing a target portion of the battery under different lighting conditions and a composite image generated by synthesizing the plurality of images, thereby reducing the time and cost required for battery appearance inspection and improving the accuracy and reliability of the inspection result.

In addition, the battery appearance inspection apparatus according to the present disclosure includes a first inspection unit configured to determine whether the battery is a defective product based on at least one image among the plurality of images, and a second inspection unit configured to determine whether the battery is a good product based on the composite image having depth information of the target portion, thereby reducing the false negative rate and the false positive rate occurring in the vision inspection.

In addition, if the battery is determined not to be a defective product by the first inspection unit, the second inspection unit determines whether the composite image belongs to one of the types of good battery images based on the first deep learning model trained using good battery images, and if the composite image corresponds to OOD (Out of Distribution) data that does not belong to the types, the battery is determined not to be a good product, thereby minimizing the false negative rate of battery appearance inspection and detecting a battery with a new type of defect.

In addition, if the battery is determined to be a defective product by the first inspection unit, the second inspection unit may re-determinate whether the battery is a defective product based on the second deep learning model trained for each defect type, thereby minimizing the false positive rate of battery appearance inspection and preventing the loss of good product batteries.

In addition, the battery appearance inspection apparatus according to the present disclosure generates an image matrix by arranging the plurality of images, or the plurality of images and the composite image, in a matrix format, and inspects the battery using this image matrix, thereby further improving the accuracy and reliability of the inspection result while preventing an increase in inspection time.

In addition, the battery appearance inspection apparatus according to the present disclosure processes an image in which a defective portion of the battery appears among the plurality of images and the composite image to generate a learning image used for learning a deep learning model for battery appearance inspection, thereby facilitating learning and upgrading of the corresponding deep learning model.

Furthermore, the embodiments according to the present disclosure may solve various technical problems other than those mentioned in this specification in the corresponding technical field as well as in related technical fields.

The present disclosure has been described with reference to specific embodiments. However, those skilled in the art will clearly understand that various modified embodiments can be implemented within the technical scope of the present disclosure. Therefore, the embodiments disclosed above should be considered from an illustrative rather than a restrictive perspective. In other words, the true technical scope of the present disclosure is indicated by the claims, and all differences within the scope equivalent thereto should be interpreted as being included in the present disclosure.

### [Explanation of reference signs]

10: battery sorting system
100: battery appearance inspection apparatus
110: lighting unit
120: image generating unit
130: control unit
132: image processing unit
134: first inspection unit
136: second inspection unit
136a: first determination module
136b: second determination module
138: learning image generating unit
140: communication unit
150: input unit
160: storage unit
170: output unit
200: transport device

## Claims

1. A battery appearance inspection apparatus comprising:
a lighting unit configured to irradiate light to a battery and change a lighting condition including at least one of a direction, an angle, and an intensity of the irradiated light at time intervals;
an image generating unit configured to photograph a target portion of the battery based on the light irradiated by the lighting unit and generate a plurality of images of the target portion so that the plurality of images are photographed under different lighting conditions;
an image processing unit configured to synthesize at least two images among the plurality of images to generate at least one composite image having depth information of the target portion;
a first inspection unit configured to determine whether the battery is a defective product based on at least one image among the plurality of images; and
a second inspection unit configured to determine whether the battery is a good product based on the at least one composite image.

2. The battery appearance inspection apparatus according to claim 1,
wherein the lighting unit includes a plurality of light sources arranged at different locations and configured to irradiate light toward the battery at different time points.

3. The battery appearance inspection apparatus according to claim 1,
wherein the image generating unit includes a plurality of cameras configured to photograph different target portions of the battery at different locations, respectively.

4. The battery appearance inspection apparatus according to claim 3,
wherein the plurality of cameras include:
a first camera configured to photograph a first target portion located at an upper end of the battery;
a second camera configured to photograph a second target portion located at a lower end of the battery; and
at least one third camera configured to photograph a third target portion located at a side surface of the battery.

5. The battery appearance inspection apparatus according to claim 1,
wherein the image processing unit is configured to generate a first image matrix by arranging at least two images among the plurality of images, and
wherein the first inspection unit is configured to determine whether the battery is a defective product based on the first image matrix.

6. The battery appearance inspection apparatus according to claim 1,
wherein the image processing unit is configured to generate a second image matrix by arranging at least one image among the plurality of images and the at least one composite image, and
wherein the second inspection unit is configured to determine whether the battery is a good product based on the second image matrix.

7. The battery appearance inspection apparatus according to claim 1,
wherein the first inspection unit is configured to determine whether the battery is a defective product before the second inspection unit, and
wherein the second inspection unit includes a first determination module configured to determine whether the battery is a good product based on the at least one composite image, when the battery is determined not to correspond to a defective product by the first inspection unit.

8. The battery appearance inspection apparatus according to claim 7,
wherein the first determination module is configured to determine whether the at least one composite image belongs to one of types of good battery images based on a first deep learning model trained using the good battery images, and determine the battery as not corresponding to a good product when the at least one composite image corresponds to OOD (Out of Distribution) data that does not belong to the types of the good battery images.

9. The battery appearance inspection apparatus according to claim 7,
wherein the second inspection unit further includes a second determination module configured to re-determinate whether the battery is a defective product based on the at least one composite image, when the battery is determined to be a defective product by the first inspection unit.

10. The battery appearance inspection apparatus according to claim 9,
wherein the second determination module is configured to re-determinate whether the battery is a defective product based on a second deep learning model trained using defective battery images.

11. The battery appearance inspection apparatus according to claim 9,
wherein the first determination module is configured to determine whether the battery is a good product based on the at least one composite image, when the battery does not correspond to a defective product as a result of re-determination by the second determination module.

12. The battery appearance inspection apparatus according to claim 1, further comprising:
a learning image generating unit configured to process an image in which a defective portion of the battery appears among the plurality of images and the at least one composite image and generate a learning image used for training a deep learning model for battery appearance inspection.

13. The battery appearance inspection apparatus according to claim 12,
wherein the learning image generating unit is configured to set a partial area including the defective portion from an entire area of the image where the defective portion appears and generate the learning image by cropping the remaining area excluding the partial area from the entire area.

14. A battery sorting system comprising:
the battery appearance inspection apparatus according to any one of claims 1 to 13; and
a transport device configured to transport the battery to one location among a pre-designated plurality of locations based on an inspection result of the battery appearance inspection apparatus.

15. The battery sorting system according to claim 14,
wherein the transport device includes:
a first transport unit configured to transport the battery to a first location, when the battery is determined to be a good product by at least the second inspection unit among the first inspection unit and the second inspection unit of the battery appearance inspection apparatus;
a second transport unit configured to transport the battery to a second location, when the battery is determined to be not a defective product by the first inspection unit and also determined to be not a good product by the second inspection unit; and
a third transport unit configured to transport the battery to a third location, when the battery is determined to be a defective product by the first inspection unit and is re-determination as a defective product by the second inspection unit.
